# EUROPÄISCHE PATENTSCHRIFT

(11) **EP 0 521 303 B1**
(45) Veröffentlichungstag und Bekanntmachung des Hinweises auf die Patenterteilung: **02.11.1995**
(21) Anmeldenummer: 92109264.9
(22) Anmeldetag: 02.06.1992
(51) Int. Cl.: B62D 33/06

(54) **Anordnung zum Kippen eines gefederten Nutzfahrzeug-Fahrerhauses**
Tilting device for the suspended driver's cab of a truck
Dispositif de basculement d'une cabine suspendue de véhicule utilitaire

(30) Priorität: 27.06.1991 DE 4121206
(43) Veröffentlichungstag der Anmeldung: 07.01.1993
(73) Patentinhaber: Iveco Magirus Aktiengesellschaft, D-89017 Ulm (DE)
(72) Erfinder: Diepold, Klaus-Dieter, W-7900 Ulm (DE); Köhler, Joachim, W-7930 Ehingen (DE)
(74) Vertreter: TER MEER STEINMEISTER & PARTNER GbR

(56) Entgegenhaltungen:
- DE-A- 1 906 337
- US-A- 4 493 386
- PATENT ABSTRACTS OF JAPAN vol. 008, no. 160 (M-312)2. April 1984 & JP-A-59 057 071 (HINO JIDOSHA KOGYO)

## Beschreibung

Die Erfindung betrifft eine Anordnung zum Kippen eines gefederten Nutzfahrzeug-Fahrerhauses mit einem Fahrerhauskippzylinder, welcher wahlweise auf der Fahrer- oder auf der Beifahrerseite unterseitig am Fahrzeugrahmen und oberseitig am Fahrerhaus hinter der Fahrerhaus-Kippachse angelenkt ist, wobei ein weiterer Hydraulikzylinder zur Verhinderung bzw. Reduzierung der Schiefstellung des gefederten Fahrerhauses um die Fahrerhauslängsachse beim Kippen vorgesehen ist.

Aus US-A-4 493 386 ist eine Kippanordnung der vorgenannten Art bekannt, bei der der Fahrerhauskippzylinder auf der Beifahrerseite und der weitere Hydraulikzylinder vorne am Fahrerhaus auf der Fahrerseite, angeordnet ist. Der weitere Hydraulikzylinder wird beim Kippen des Fahrerhauses durch den sich in der Fahrerhaus-Kippanlage aufbauenden Druck ausgefahren. Das Fahrerhaus federt dadurch vorne beidseitig bis zum Einsetzen eines Zuganschlages aus, der im allgemeinen in die Fahrerhaus-Stoßdämpfer integriert ist. Der Nachteil der bekannten Ausführung besteht darin, daß die beim Kippen des Fahrerhauses auftretende Reaktionskraft zur Fahrerhausgewichtskraft von den Stoßdämpfern übertragen wird und die Stoßdämpfer vergleichsweise stark dimensioniert sein müssen, da Kräfte in dieser Größenordnung im Fahrbetrieb nicht auftreten. Ein weiterer Nachteil der bekannten Anordnung ist der geringere mögliche Kippwinkel des Fahrerhauses, da der Anteil des Kippwinkels, der aus der Einfederung des Fahrerhauses in der gekippten Endstellung resultiert, wegfällt, da die Fahrerhausfederung durch den weiteren Hydraulikzylinder in Strecklage gehalten wird.

Aufgabe der Erfindung ist die Schaffung einer Kippanordnung der eingangs genannten Art, die einfach aufgebaut ist und bei der die Fahrerhausfederwege beim Kippen des Fahrerhauses derart eingeschränkt bzw. blockiert werden, daß gleichwohl die Stoßdämpfer schwach und kostengünstig dimensioniert sein können.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 9.

Wesen der Erfindung ist die Anordnung des weiteren Hydraulikzylinders und des Fahrerhauskippzylinders auf derselben Fahrzeugseite. Hierbei ist der Hydraulikzylinder fahrerhausseitig gelegen, d.h. er führt bei einer Kippbewegung des Fahrerhauses ebenfalls die Kippbewegung durch. Er ist als sogenannter Federblockierzylinder ausgebildet, der parallel zu einem vorderen Fahrerhaus-Stoßdämpfer bzw. der dortigen Fahrerhausfeder gelegen ist. Im Fahrbetrieb des Fahrzeugs nimmt er seine Maximallänge und beim Kippen des Fahrerhauses seine Minimallänge oder während des Kippens zumindest eine einstellbare Zwischenstellung ein.

Vorzugsweise ist er als einseitig wirkender hydraulischer Zylinder ausgebildet, der bei ausgefahrener Maximallänge drucklos und bei eingefahrener Minimallänge druckbeaufschlagt ist.

Zweckmäßigerweise ist der Federblockierzylinder in Richtung der ausgefahrenen Maximalstellung durch eine Rückstellfeder, insbesondere eine Schraubenfeder, vorgespannt.

Um die Fahrerhaus-Federbewegung im Fahrbetrieb zu ermöglichen, weist der Federblockierzylinder vorzugsweise ein oberseitiges oder unterseitiges Langloch-Lager auf, wobei die Länge des Langlochs gleich odere größer als die maximale Fahrerhaus-Federbewegung ist.

Federblockierzylinder und Fahrerhauskippzylinder liegen bevorzugt auf der Beifahrerseite in der im wesentlichen gleichen Vertikalebene, die sich vorzugsweise in Fahrzeuglängsrichtung und insbesondere senkrecht zur Kippachse erstreckt. Im Bereich der vorgenannten gleichen Vertikalebene kann auch die zugeordnete Fahrerhausfeder bzw. der dortige Stoßdämpfer gelegen sein.

Bei kippbaren Fahrerhäusern mit hydraulischer Fahrerhauskippanlage wird das Fahrerhaus in der Regel durch einen hydraulischen Zylinder, der einseitig am Fahrzeug angeordnet ist, zu Reparatur- bzw. Wartungsarbeiten nach vorne gekippt. Durch die einseitige Anordnung des Kippzylinders wird das Fahrerhaus beim Kippen, von vorne betrachtet, um die Fahrerhauslängsachse schiefgestellt. Das Maß dieser Schiefstellung ist zum einen abhängig von den zur Verfügung stehenden Fahrerhausfederwegen (d.h. komfortabel gefederte Fahrerhäuser, die im Vergleich zu hart aufgehängten Fahrerhäusern größere Federwege benötigen, weisen eine stärkere Schiefstellung auf) und zum anderen vom Anlenkungspunkt des Fahrerhauskippzylinders am Fahrerhaus in Fahrzeuglängsrichtung. Sind diese beiden Punkte durch konstruktive Vorgaben festgelegt,, bleibt zur Verringerung bzw. zur Verhinderung der Schiefstellung des Fahrerhauses die Möglichkeit, die Fahrerhausfederwege beim Kippen des Fahrerhauses einzuschränken bzw. zu blockieren.

Probleme, die durch die Schiefstellung des Fahrerhauses auftreten, sind zum einen der schlechte optische Eindruck und zum anderen die Notwendigkeit, andere Baugruppen (beispielsweise Rohluftansaugung über fahrerhausfesten Schnorchel zum fahrgestellfesten Luftfilter) so auszulegen, daß die in diesem Maß im Fahrbetrieb nicht vorkommende Schiefstellung des Fahrerhauses keine Beschädigung dieser Baugruppen verursacht. Dies bedingt einen höheren Aufwand und teilweise die Funktion dieser Baugruppen negativ beeinflussende Maßnahmen bei deren Gestaltung.

Vorgenannte Nachteile werden durch die Erfindung wirkungsvoll behoben. Die Schiefstellung des Fahrerhauses beim Kippen wird mit Hilfe einfacher Mittel verhindert. Dadurch entfallen die vorgenannten Probleme für angrenzende Baugruppen.

Ein weiterer Vorteil der Erfindung ergibt sich daraus, daß die zum Kippen des Fahrerhauses erforderliche Gegenkraft zum Fahrerhausgewicht bei der vorgegebenen Anordnung des Kippzylinders im Bereich der Fahrerhausvorderwand von diesem Zylinder übertragen wird, im Gegensatz zu einem Fahrzeug ohne diesen Zylinder, bei dem der auf der Seite des Fahrerhauskippzylinders liegende Fahrerhausstoßdämpfer diese Gegenkraft überträgt. Die Stoßdämpfer können daher wesentlich schwächer und kostengünstiger dimensioniert werden, da die Dämpfungskräfte im Fahrbetrieb wesentlich kleiner als die beim Kippen des Fahrerhauses auftretenden Zugkräfte sind.

Die Kippanordnung kennzeichnet sich insbesondere durch folgende Merkmale des weiteren Hydraulikzylinders:
- Langloch am Kolbenstangenlager oder am Zylindergehäuselager oder an einer der fahrerhaus- bzw. fahrzeugseitigen Konsolen zur Anlenkung des Zylinders, um die Fahrerhausfederbewegung im Fahrbetrieb zu ermöglichen.
- Innerhalb oder außerhalb des Zylinders angeordnete Feder zur Rückstellung des Zylinders in Position "Fahrbetrieb" nach Beendigung des Kippvorganges (Zylinder ist dann drucklos).
- Anlenkung eines Zylinderlagers am Fahrerhaus oder einem mit dem Fahrerhaus verbundenen Bauteil, Anlenkung des anderen Zylinderlagers in der Fahrerhauskippachse am Fahrgestell oder einem mit dem Fahrgestell verbundenen Bauteil oder beliebige Anlenkung am Fahrerhausschwingarm, wenn dieser kinematisch so angeordnet ist, daß er die Kippbewegung des Fahrerhauses mitausführt.

Die Erfindung wird nachfolgend anhand eines Ausführungsbeispiels unter Bezugnahme auf die beigefügte Zeichnung näher beschrieben; es zeigen:
- Fig. 1: in schematischer Seitenansicht ein Nutzfahrzeug-Fahrerhaus während des Fahrbetriebs mit Kippanordnung,
- Fig. 2: das Nutzfahrzeug-Fahrerhaus einschließlich Kippanordnung, gesehen von vorne,
- Fig. 3: das Nutzfahrzeug-Fahrerhaus der Fig. 1 in seiner Kipplage,
- Fig. 4: die Einzelheit A der Fig. 2, und
- Fig. 5: die Einzelheit der Fig. 4 in einem Vertikallängsschnitt des Fahrzeugs im Bereich des weiteren Hydraulikzylinders.

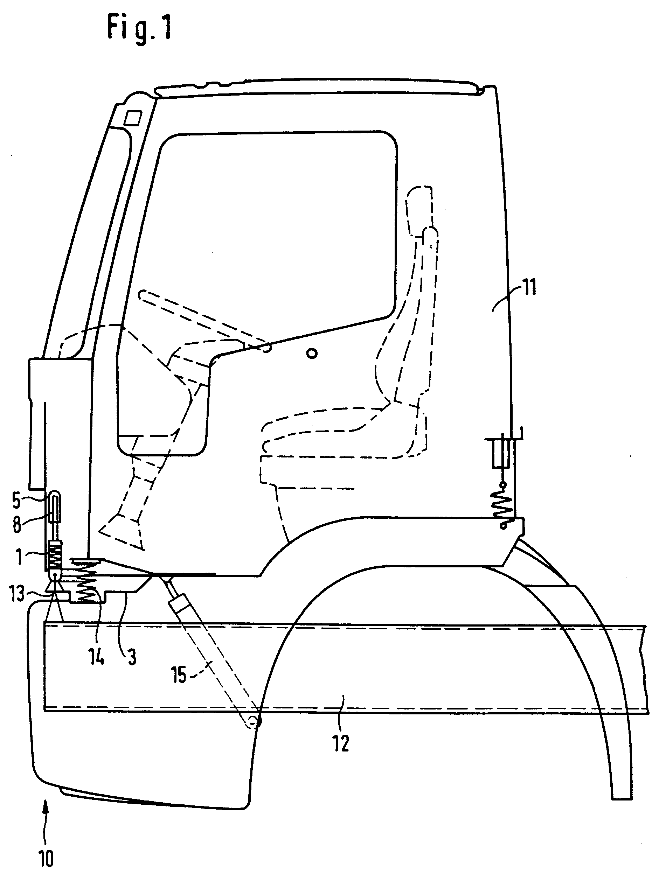

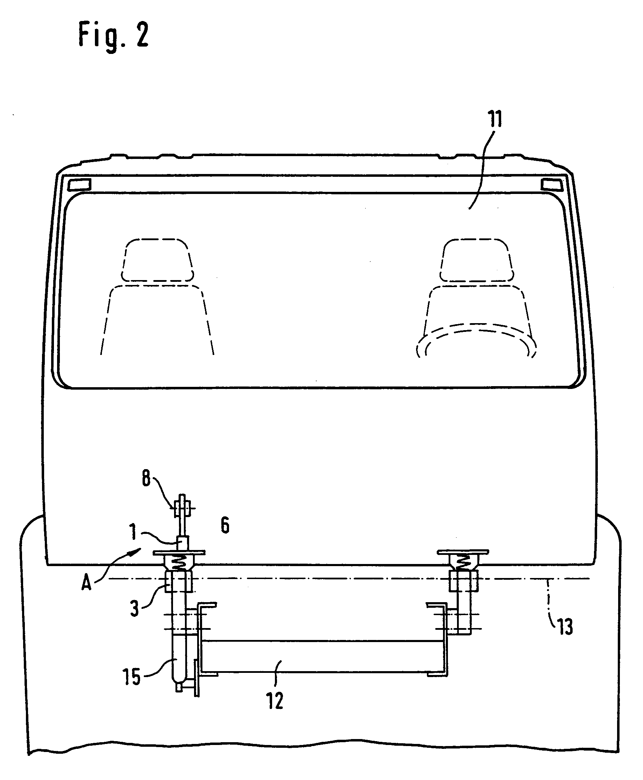

Gemäß den Fig. 1 bis 5 umfaßt ein Nutzfahrzeug ein gefedertes kippbares Fahrerhaus (11), dessen Kippanordnung (10) einen an sich bekannten Fahrerhauskippzylinder (15) auf der Beifahrerseite aufweist, welcher unterseitig am Fahrzeugrahmen (12) und oberseitig am Fahrerhaus (11) hinter der Kippachse (13) angelenkt ist.

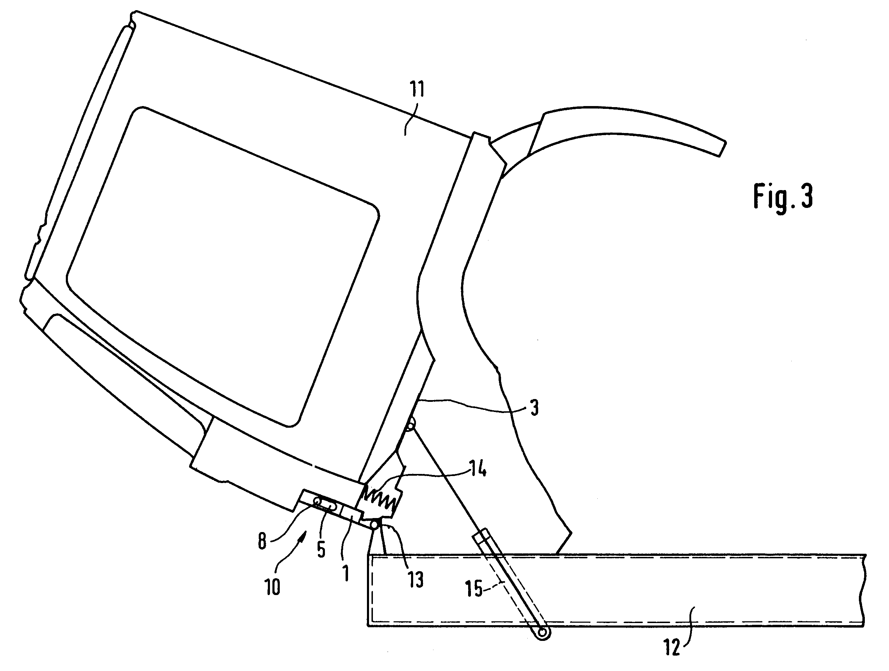

Die Kippanordnung (10) umfaßt ferner einen Hydraulikzylinder zur Verhinderung bzw. Reduzierung der Schiefstellung des gefederten Fahrerhauses beim Kippen. Der Hydraulikzylinder ist ebenfalls auf der Beifahrerseite gelegen und als sogenannter Federblockierzylinder (1) parallel zur vorderen beifahrerseitigen Fahrerhausfeder (14) bzw. zum vorderen beifahrerseitigen Stoßdämpfer (2) angeordnet. Der Federblockierzylinder (1) ist fahrerhausseitig gelegen und vollzieht bei einer Kippbewegung die Kippbewegung mit, wie dies im Vergleich der Fig. 1 und 3 zu sehen ist.

Insbesondere ist das untere Ende des Federblockierzylinders (1) an einer Schwinge (3) angelenkt, welche einerseits in der Kippachse (13) am Fahrgestell und andererseits am Fahrerhaus angelenkt ist.

An der Schwinge (3) sind unterseitig auch die Fahrerhausfeder (14) bzw. den Stoßdämpfer (2) befestigt, welche oberseitig am Fahrerhausboden abgestützt sind.

Der Federblockierzylinder (1) ist ein einseitig wirkender hydraulischer Zylinder, der im Fahrbetrieb des Fahrzeuges seine Maximallänge und bei einem Kippen des Fahrerhauses (11) seine Minimallänge einnimmt. Bei ausgefahrener Maximallänge ist der Federblockierzylinder (1) drucklos. Druckbeaufschlagt ist der Zylinder in seiner Minimalstellung.

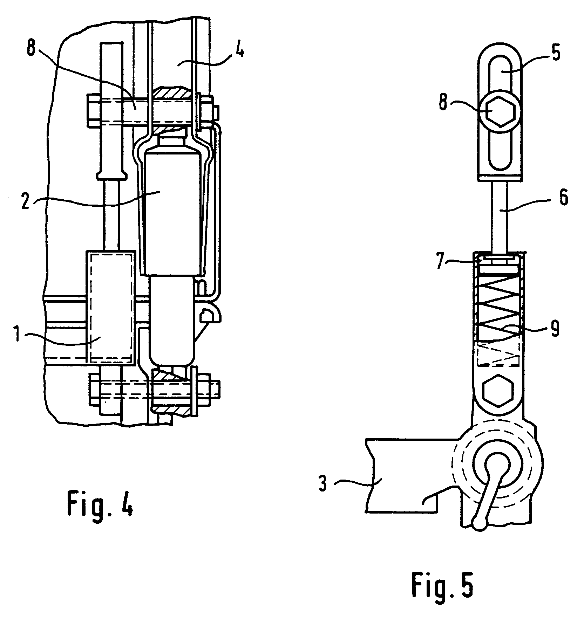

Wie insbesondere den Fig. 4 und 5 zu entnehmen ist, ist der Federblockierzylinder (1) an der Fahrerhausvorderwand parallel zum vorderen Fahrerhausstoßdämpfer (2) zwischen Fahrerhausschwingarm (3) und einer fahrerhausfesten Konsole (4) angeordnet.

Ist der Hydraulikzylinder in der Position "Fahrbetrieb", d.h. in seiner maximal ausgefahrenen Stellung, sorgt ein Auge mit Langloch (5) am oberen Ende der Kolbenstange (6) des Federblockierzylinders (1) für die Möglichkeit einer freien Einfederung des Fahrerhauses.

Bei Beginn des Fahrerhauskippvorgangs wird parallel zum Fahrerhauskippzylinder (15) der Ringraum (7) des Federblockierzylinders (1) mit Öl beaufschlagt. Dadurch wird die Kolbenstange (6) zunächst eingefahren, bis der obere Rand des Langlochs (5) am fahrerhausfesten Bolzen (8) anliegt. Anschliessend baut sich in der Fahrerhauskippanlage beim weiteren Betätigen der Kipp-Pumpe Druck auf. Durch den Anstieg des Systemdrucks fährt die Kolbenstange (6) des Federblockierzylinders (1) weiter ein.

Je nach vorgesehenem Zylinderhub kann die Fahrerhausfederung dadurch in der Stellung "statische Lage" bzw. in jeder weiteren eingefederten Stellung bis hin zur maximal voll eingefederten Lage fixiert werden. Der Zylinderdurchmesser ist so dimensioniert, daß er die vordere Fahrerhausfederung bereits vor dem Abheben des Fahrerhauses (11) von der hinteren Fahrerhausabstützung in die gewünschte Stellung bringt. Der Federblockierzylinder (1) bleibt während des gesamten Fahrerhauskippvorgangs auf seine Minimallänge eingefahren.

Nach einem Zurückkippen des Fahrerhauses (11) wird der Ringraum (7) des Federblockierzylinders (1) drucklos. Die Kolbenstange (6) des Federblockierzylinders (1) wird anschließend durch die in der dargestellten Ausführung im Zylinder angeordnete Rückstellfeder (9) in Form einer Schraubenfeder in die Stellung "Fahrbetrieb" zurückgefahren. Bei einer Ausführung ohne diese Feder wird die Kolbenstange (6) durch die ersten an den Fahrerhauskippvorgang anschließenden Ausfederbewegungen des Fahrerhauses (11) in diese Stellung zurückgestoßen.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

## Patentansprüche

1. Anordnung (10) zum Kippen eines gefederten Nutzfahrzeug-Fahrerhauses (11) mit einem Fahrerhauskippzylinder (15) auf einer Fahrzeugseite, welcher unterseitig am Fahrzeugrahmen (12) und oberseitig am Fahrerhaus (11) hinter der Fahrerhaus-Kippachse (13) angelenkt ist, wobei ein weiterer Hydraulikzylinder zur Verhinderung bzw. Reduzierung der Schiefstellung des gefederten Fahrerhauses (11) um die Fahrerhauslängsachse beim Kippen vorgesehen ist,
dadurch gekennzeichnet,
daß der weitere Hydraulikzylinder und der Fahrerhauskippzylinder auf derselben Fahrzeugseite angeordnet sind und der zusätzliche Hydraulikzylinder als fahrerhausseitiger, die Kippbewegung des Fahrerhauses mit ausführender Federblockierzylinder (1) parallel zu einer vorderen Fahrerhausfeder (14) bzw. einem Stoßdämpfer (2) gelegen ist, wobei der Federblockierzylinder (1) im Fahrbetrieb des Fahrzeugs seine Maximallänge und beim Kippen des Fahrerhauses (11) seine Minimallänge oder während des Kippens zumindest eine einstellbare Zwischenstellung einnimmt.

2. Anordnung nach Anspruch 1,
dadurch gekennzeichnet,
daß der Federblockierzylinder (1) ein einseitig wirkender Hydraulikzylinder ist, der bei ausgefahrener Maximallänge drucklos und in Richtung eingefahrener Minimallänge druckbeaufschlagt ist.

3. Anordnung nach Anspruch 2,
dadurch gekennzeichnet,
daß der Federblockierzylinder (1) in Richtung ausgefahrener Maximalstellung durch eine Rückstellfeder (9) vorgespannt ist.

4. Anordnung nach einem der Ansprüche 1 bis 3,
dadurch gekennzeichnet,
daß der Federblockierzylinder (1) ein oberseitiges oder unterseitiges Langloch-Lager aufweist, wobei die Länge des Langlochs (5) gleich oder größer ist als die maximale Fahrerhaus-Federbewegung.

5. Anordnung nach einem der Ansprüche 1 bis 4,
dadurch gekennzeichnet,
daß der Federblockierzylinder (1) und der Fahrerhauskippzylinder (15) in der im wesentlichen gleichen Vertikalebene gelegen sind.

6. Anordnung nach Anspruch 5,
dadurch gekennzeichnet,
daß die gleiche Vertikalebene sich in Fahrzeuglängsrichtung erstreckt.

7. Anordnung nach Anspruch 5 oder 6,
dadurch gekennzeichnet,
daß die gleiche Vertikalebene senkrecht zur Kippachse (13) gelegen ist.

8. Anordnung nach einem der Ansprüche 5 bis 7,
dadurch gekennzeichnet,
daß im Bereich der gleichen Vertikalebene auch die zugeordnete vordere beifahrerseitige Fahrerhausfeder (14) bzw. die dortige Stoßdämpferanordnung (2) gelegen ist.

9. Anordnung nach Anspruch 1 bis 3 und 5 bis 8,
dadurch gekennzeichnet,
daß die fahrerhausfeste oder fahrgestellfeste Anlenkung des Federblockierzylinders ein Langloch-Lager aufweist, wobei die Länge des Langlochs (5) gleich oder größer ist als die maximale Fahrerhaus-Federbewegung.

## Claims

1. An arrangement (10) for tilting a sprung commercial vehicle cab (11) with a cab tilt cylinder (15) on one side of the vehicle, which on the under-side is hinge-mounted on the vehicle chassis (12) and above on the cab (11) behind the axis of tilt of the cab (13), wherein an additional hydraulic cylinder is envisaged for the prevention or reduction of misalignment of the sprung cab (11) about the longitudinal axis of the cab on tilting,
characterised in that
the additional hydraulic cylinder and the cab tilt cylinder are located on the same side of the cab and that the additional hydraulic cylinder is located as a spring locking cylinder (1) on the cab side, which contributes to the tilting movement of the cab and is parallel to a front cab spring (14) or a shock absorber (2), whereby the spring locking cylinder (1) reaches its maximum length when the vehicle is in driving mode and reaches its minimum length on tilting of the cab (11), or at least an intermediate position during tilt.

2. An arrangement in accordance with Claim 1,
characterised in that
the spring locking cylinder (1) is a hydraulic cylinder acting in one direction only, being at zero pressure when extended to its maximum length and pressurised in the direction of its compressed minimum length.

3. An arrangement in accordance with Claim 2,
characterised in that
the spring locking cylinder (1) is pre-loaded in the direction of its maximum extended position by a return spring (9).

4. An arrangement in accordance with one of Claims 1 to 3,
characterised in that
the spring locking cylinder (1) exhibits on its upper or lower side a slotted bearing, wherein the length of the slot (5) is equal to or greater than the maximum cab spring travel.

5. An arrangement in accordance with one of Claims 1 to 4,
Characterised in that
the spring locking cylinder (1) and the cab tilting cylinder (15) are set in essentially the same vertical plane.

6. An arrangement in accordance with Claim 5,
characterised in that
the same vertical plane extends over the longitudinal axis of the vehicle.

7. An arrangement in accordance with Claims 5 or 6,
characterised in that
the game vertical plane is set perpendicular to the axis of tilt (13).

8. An arrangement in accordance with one of Claims 5 to 7,
characterised in that
the corresponding front cab spring (14) on the passenger side and the corresponding shock absorber arrangement (2) are also set in the area of the same vertical plane.

9. An arrangement in accordance with Claims 1 to 3 and 5 to 8,
characterised in that
the articulation of the spring locking cylinder attached on the cab side or on the chassis side exhibits a slot bearing whereby the length of the slot (5) it equal to or greater than the maximum cab spring travel.

## Revendications

1. Dispositif (10) de basculement d'une cabine suspendue (11) sur ressorts, de véhicule utilitaire, comportant un vérin (15) assurant le basculement de la cabine et situé d'un côté du véhicule, ce vérin étant articulé en dessous du châssis (12) du véhicule et en haut sur la cabine (11) derrière l'axe de basculement, tandis qu'un second vérin hydraulique est prévu pour empêcher ou réduire l'inclinaison de la cabine suspendue (11) autour de son axe longitudinal lors du basculement, caractérisé en ce que le second vérin hydraulique et le vérin de basculement sont montés du même côté du véhicule, le second vérin, accompagnant le basculement de la cabine, est un vérin de blocage élastique (1) monté parallèlement à un ressort de cabine (14) ou à un amortisseur de cabine (2), le vérin de blocage élastique (1) présente sa longueur maximale lorsque le véhicule est en déplacement, sa longueur minimale lorsque la cabine (11) est basculée, ou occupe pendant le basculement au moins une position intermédiaire réglable.

2. Dispositif selon la revendication 1, caractérisé en ce que le vérin de blocage (1) est un vérin hydraulique à simple effet, sans pression lorsqu'il est développé à sa longueur maximale, soumis à pression lorsqu'il se réduit en direction de sa longueur minimale.

3. Dispositif selon la revendication 2, caractérisé en ce que le vérin de blocage élastique (1) est soumis à la tension d'un ressort de rappel agissant en direction de la position sortie maximale.

4. Dispositif selon une des revendications 1 à 3, caractérisé en ce que le vérin de blocage élastique (1) comporte un palier supérieur ou inférieur percé d'une boutonnière (5) dont la longueur est au moins égale au déplacement maximal de la cabine sur sa suspension.

5. Dispositif selon une des revendications 1 à 4, caractérisé en ce que le vérin de blocage élastique (1) et le vérin de basculement (15) de la cabine sont montés sensiblement dans le même plan vertical.

6. Dispositif selon la revendication 5, caractérisé en ce que le plan vertical commun est orienté selon la direction longitudinale du véhicule.

7. Dispositif selon la revendication 5 ou 6, caractérisé en ce que le plan vertical commun est perpendiculaire à l'axe de basculement (13).

8. Dispositif selon une des revendications 5 à 7, caractérisé en ce que le ressort de cabine (14) situé en avant du côté du passager, ou le dispositif amortisseur (2) est monté sensiblement dans le même plan vertical.

9. Dispositif selon une des revendications 1 à 3 ou 5 à 8, caractérisé en ce que l'articulation au châssis ou à la cabine du vérin de blocage élastique comporte un palier équipé d'une boutonnière dont la longueur est au moins égale au déplacement maximal de la suspension de la cabine.
